# EUROPÄISCHE PATENTSCHRIFT

(11) **EP 3 740 618 B1**
(45) Veröffentlichungstag und Bekanntmachung des Hinweises auf die Patenterteilung: **03.03.2021**
(21) Anmeldenummer: 20700471.4
(22) Anmeldetag: 09.01.2020
(51) Int. Cl.: E01B 31/04, B23D 45/00, B23D 59/00

(54) **TRENNSCHLEIFGERÄT UND VERFAHREN ZUM DURCHTRENNEN EINER SCHIENE EINES GLEISES**
CUTTING GRINDER AND METHOD FOR CUTTING THROUGH A RAIL OF A TRACK
TRONÇONNEUSE À MEULE ET PROCÉDÉ DE SECTIONNEMENT D'UN RAIL D'UNE VOIE FERRÉE

(30) Priorität: 11.01.2019 DE 102019200303
(43) Veröffentlichungstag der Anmeldung: 25.11.2020
(73) Patentinhaber: Robel Bahnbaumaschinen GmbH, 83395 Freilassing (DE)
(72) Erfinder: WIDLROITHER, Otto, 83395 Freilassing (DE); HÖLZLWIMMER, Thomas, 84508 Burgkirchen (DE)
(74) Vertreter: Rau, Schneck & Hübner Patentanwälte Rechtsanwälte PartGmbB
(86) Internationale Anmeldenummer: PCT/EP2020/050453
(87) Internationale Veröffentlichungsnummer: WO 2020/144291

(56) Entgegenhaltungen:
- WO-A1-2018/097194
- US-A- 4 156 991

## Beschreibung

Die vorliegende Patentanmeldung nimmt die Priorität der deutschen Patentanmeldung DE 10 2019 200 303.6 in Anspruch, deren Inhalt durch Bezugnahme hierin aufgenommen wird.

Die Erfindung betrifft ein Trennschleifgerät und ein Verfahren zum Durchtrennen einer Schiene eines Gleises.

Beim Austausch von verschlissenen Schienenabschnitten muss eine Schiene durchtrennt werden. Dies erfolgt üblicherweise mittels eines manuell geführten bzw. handgeführten Trennschleifgeräts. Beim Durchtrennen der Schiene tritt das Problem auf, dass diese mittels des Trennschleifgeräts in einer ersten Trennschleifposition aufgrund der Abmessungen der Schiene und der verwendeten Trennschleifscheibe nicht vollständig durchtrennt werden kann. Deshalb muss das Trennschleifgerät von der ersten Trennschleifposition, in der das Trennschleifgerät an einer ersten Seite einer Schienen-Symmetrieebene angeordnet ist, in eine zweite Trennschleifposition überführt werden, in der das Trennschleifgerät an einer zweiten Seite der Schienen-Symmetrieebene angeordnet ist. In der zweiten Trennschleifposition kann die Schiene dann vollständig durchtrennt werden.

Aus der WO 2018/097194 A1 ist eine Arbeitsmaschine in Form einer Handkreissäge bekannt. Die Handkreissäge ermöglicht die manuelle Einstellung unterschiedlicher Drehrichtungen des Sägeblatts.

Aus der US 4 156 991 A ist ein Trennschleifgerät zum Durchtrennen einer Schiene bekannt. Das Trennschleifgerät ermöglicht die manuelle Einstellung unterschiedlicher Drehrichtungen.

Der Erfindung liegt die Aufgabe zugrunde, ein Trennschleifgerät zu schaffen, das auf einfache, bedienerfreundliche und effiziente Weise ein Durchtrennen einer Schiene eines Gleises ermöglicht.

Diese Aufgabe wird durch ein Trennschleifgerät mit den Merkmalen des Anspruchs 1 gelöst. Durch die Erkennungseinrichtung ist eine automatische Erkennung der jeweiligen Trennschleifposition möglich. Die Erkennungseinrichtung ist vorzugsweise an dem Grundkörper angeordnet. Hierdurch ist auf einfache und bedienerfreundliche Weise die Drehrichtung des Antriebs umkehrbar, wenn die Trennschleifpositionen gewechselt werden. Ein unkontrollierter Funkenflug wird beim Durchtrennen der Schiene einfach und bedienerfreundlich vermieden. Durch die Erkennung der jeweiligen Trennschleifposition ist eine schnelle Umkehr der Drehrichtung des Antriebs möglich, sodass das Durchtrennen der Schiene effizient fortgesetzt werden kann. Durch den mindestens einen Sensor wird die jeweilige Trennschleifposition automatisch erkannt. Der mindestens eine Sensor ist beispielsweise als Beschleunigungssensor, optischer Sensor und/oder als Schwerkraftsensor bzw. als elektronisches Lot ausgebildet.

Die Steuereinheit ermöglicht ein automatisches Einstellen der Drehrichtung des Antriebs in Abhängigkeit der jeweils erkannten Trennschleifposition, sodass nach einem Wechsel der Trennschleifposition die Drehrichtung des Antriebs automatisch umgekehrt wird. Hierdurch wird einfach und bedienerfreundlich ein unkontrollierter Funkenflug vermieden, sodass das Durchtrennen nach einem Wechsel der Trennschleifposition effizient fortgesetzt werden kann. Die Steuereinheit ist in Signalverbindung mit Kontaktschaltern und/oder mindestens einem Sensor zum Erkennen der jeweiligen Trennschleifposition.

Ein Trennschleifgerät nach Anspruch 2 gewährleistet ein einfaches, bedienerfreundliches und effizientes Durchtrennen der Schiene. Durch die Verstelleinrichtung ist der mindestens eine Handgriff an die Trennschleifpositionen beidseitig einer Schienen-Symmetrieebene anpassbar. Hierdurch ist das Trennschleifgerät in der jeweiligen Trennschleifposition einfach und bedienerfreundlich manuell führbar. Die Verstelleinrichtung ermöglicht zudem eine optimale Bodenfreiheit beim manuellen Führen des Trennschleifgeräts und beim Durchtrennen der Schiene, sodass das Durchtrennen vergleichsweise effizient möglich ist.

In der ersten Trennschleifposition ist das Trennschleifgerät an einer ersten Seite der Schienen-Symmetrieebene angeordnet. In der ersten Trennschleifposition ist eine erste Seite des Grundkörpers einem Schotterbett des Gleises abgewandt und eine zweite Seite des Grundkörpers dem Schotterbett zugewandt. Die zweite Seite des Grundkörpers ist gegenüberliegend zu der ersten Seite angeordnet. In der ersten Trennschleifposition ist der mindestens eine Handgriff in einer ersten Verstellposition angeordnet. Demgegenüber ist das Trennschleifgerät in der zweiten Trennschleifposition an einer zweiten Seite der Schienen-Symmetrieebene angeordnet, die der ersten Seite gegenüberliegt. In der zweiten Trennschleifposition ist die zweite Seite des Grundkörpers dem Schotterbett abgewandt und die erste Seite des Grundkörpers dem Schotterbett zugewandt. In der zweiten Trennschleifposition ist der mindestens eine Handgriff in einer zweiten Verstellposition angeordnet.

Der mindestens eine Handgriff ist vorzugsweise an der Verstelleinrichtung angeordnet. Die Verstelleinrichtung ist vorzugsweise an dem Grundkörper angeordnet.

Das Trennschleifgerät gemäß dem Oberbegriff des Anspruchs 1 kann zusammen mit der Verstelleinrichtung insbesondere auch eine eigenständige Erfindung bilden, die unabhängig von der Erkennungseinrichtung ist.

Ein Trennschleifgerät nach Anspruch 3 gewährleistet ein einfaches, bedienerfreundliches und effizientes Durchtrennen der Schiene. Der mindestens eine Handgriff ist durch eine Verlagerung der Verstelleinrichtung einfach und bedienerfreundlich verstellbar und an die jeweilige Trennschleifposition anpassbar. Vorzugsweise ist die Verstelleinrichtung relativ zu dem Grundkörper zumindest teilweise verschwenkbar und/oder linear verlagerbar. Der mindestens eine Handgriff ist an der Verstelleinrichtung befestigt und mit dieser verlagerbar.

Ein Trennschleifgerät nach Anspruch 4 gewährleistet ein einfaches, bedienerfreundliches und effizientes Durchtrennen der Schiene. Der mindestens eine Handgriff ist an dem Traggestell befestigt. Das Traggestell ist vorzugsweise mittels eines Schwenklagers an dem Grundkörper gelagert. Durch Verschwenken des Traggestells um die Schwenkachse wird der mindestens eine Handgriff von einer ersten Verstellposition in eine zweite Verstellposition überführt und umgekehrt. Vorzugsweise verläuft die Schwenkachse im Wesentlichen parallel zu der Drehachse des Antriebs.

Ein Trennschleifgerät nach Anspruch 5 gewährleistet ein einfaches, benutzerfreundliches und effizientes Durchtrennen der Schiene. Der Grundkörper definiert eine Grundkörper-Ebene, die durch den Grundkörper und die Drehachse verläuft. Die Handgriffe sind vorzugsweise an unterschiedlichen Seiten der Grundkörper-Ebene angeordnet. Vorzugsweise sind die Handgriffe gemeinsam verlagerbar. Insbesondere sind die Handgriffe mittels der Verstelleinrichtung derart verlagerbar, dass der eine Handgriff zu der Grundkörper-Ebene hin verlagert wird, wohingegen der andere Handgriff gleichzeitig von der Grundkörper-Ebene weg verlagert wird.

Ein Trennschleifgerät nach Anspruch 6 gewährleistet ein einfaches, bedienerfreundliches und effizientes Durchtrennen der Schiene. Durch den symmetrischen Aufbau der Verstelleinrichtung ist das Trennschleifgerät in den Trennschleifpositionen in gleicher Weise führbar und bedienbar. Vorzugsweise verläuft die Symmetrieebene durch eine Schwenkachse der Verstelleinrichtung.

Ein Trennschleifgerät nach Anspruch 7 gewährleistet ein einfaches, bedienerfreundliches und effizientes Durchtrennen der Schiene. Dadurch, dass die Handgriffe an unterschiedlichen Seiten des Grundkörpers bzw. einer Grundkörper-Ebene, die durch den Grundkörper und die Drehachse verläuft, angeordnet sind, ist das Trennschleifgerät in jeder der Trennschleifpositionen mittels eines eigenen Handgriffs manuell führbar. Durch die Verstelleinrichtung werden in der jeweiligen Trennschleifposition eine optimale Bodenfreiheit zu einem Schotterbett des Gleises und ein einfaches Führen mittels des jeweiligen Handgriffs ermöglicht.

Ein Trennschleifgerät nach Anspruch 8 gewährleistet ein einfaches, bedienerfreundliches und effizientes Durchtrennen der Schiene. Die Arretiereinheit dient insbesondere zum Arretieren eines Traggestells der Verstelleinrichtung, an dem der mindestens eine Handgriff, vorzugweise ein erster Handgriff und ein zweiter Handgriff angeordnet sind. Die Arretiereinheit ermöglicht vorzugsweise ein stufenloses und/oder ein stufenweises Verstellen des mindestens einen Handgriffs. Vorzugsweise umfasst die Arretiereinheit ein Spannelement, beispielsweise einen Schraubhebel. Das Spannelement ist insbesondere in einer Nut bzw. einer Ausnehmung des Traggestells geführt. Vorzugsweise ist das Traggestell mittels eines Schwenklagers und mittels der Arretiereinheit beidseitig des Grundkörpers gelagert.

Ein Trennschleifgerät nach Anspruch 9 gewährleistet ein einfaches, bedienerfreundliches und effizientes Durchtrennen der Schiene. Die Anschläge ermöglichen ein schnelles und zuverlässiges Verstellen des mindestens einen Handgriffs. Vorzugsweise werden die Anschläge durch mindestens einen Führungsbolzen ausgebildet, der in mindestens einer Führungsnut bzw. Führungsausnehmung geführt ist. Die jeweilige Führungsnut bzw. Führungsausnehmung ist beispielsweise in einem Traggestell der Verstelleinrichtung ausgebildet und der jeweilige Führungsbolzen an dem Grundkörper befestigt.

Ein Trennschleifgerät nach Anspruch 10 gewährleistet ein einfaches, bedienerfreundliches und effizientes Durchtrennen der Schiene. Die Verstelleinrichtung umfasst vorzugsweise ein Traggestell mit einem ersten Traggestellteil und einem zweiten Traggestellteil, die an gegenüberliegenden Seiten des Grundkörpers gelagert sind und mittels des mindestens einen Handgriffs, insbesondere mittels des ersten Handgriffs und des zweiten Handgriffs miteinander verbunden sind. Vorzugsweise ist das erste Traggestellteil mittels eines Schwenklagers an einer Seite des Grundkörpers gelagert und zweite Traggestellteil mittels einer Arretiereinheit an einer gegenüberliegenden Seite gelagert.

Ein Trennschleifgerät nach Anspruch 11 gewährleistet ein einfaches, bedienerfreundliches und effizientes Durchtrennen der Schiene. Die Kontaktschalter sind insbesondere derart angeordnet, dass diese mittels des mindestens einen Handgriffs und/oder der Verstelleinrichtung betätigbar sind. Durch ein Verstellen des mindestens einen Handgriffs und/oder der Verstelleinrichtung wird somit automatisch einer der Kontaktschalter betätigt und somit die zum Durchtrennen vorgesehene Trennschleifposition erkannt. Alternativ oder zusätzlich kann ein manuelles Betätigen mindestens eines Kontaktschalters, insbesondere von zwei Kontaktschaltern, zum Erkennen der vorgesehenen Trennschleifposition und/oder Bestätigen der erkannten Trennschleifposition vorhanden sein. Die Kontaktschalter sind vorzugsweise an gegenüberliegenden Seiten des Grundkörpers angeordnet.

Der Erfindung liegt ferner die Aufgabe zugrunde ein Verfahren zu schaffen, dass auf einfache, bedienerfreundliche und effiziente Weise ein Durchtrennen einer Schiene eines Gleises ermöglicht.

Diese Aufgabe wird durch ein Verfahren mit den Merkmalen des Anspruchs 12 gelöst. Die Vorteile des erfindungsgemäßen Verfahrens entsprechen den bereits beschriebenen Vorteilen des erfindungsgemäßen Trennschleifgeräts. Die automatische Umkehrung der Drehrichtung ermöglicht ein effizientes Fortsetzen des Durchtrennens der Schiene. Die Drehrichtung wird in Abhängigkeit der jeweils erkannten Trennschleifposition eingestellt, beispielsweise eine erste Drehrichtung in der ersten Trennschleifposition und eine entgegengesetzte zweite Drehrichtung in der zweiten Trennschleifposition.

Ein Verfahren nach Anspruch 13 gewährleistet ein einfaches, bedienerfreundliches und effizientes Durchtrennen der Schienen. Das Verfahren zum Durchtrennen einer Schiene kann unabhängig von dem Erkennen der Trennschleifposition mittels der Erkennungseinrichtung und dem umgekehrten Einstellen der Drehrichtungen des Antriebs in den Trennschleifpositionen eine eigenständige Erfindung bilden, die durch die Verstelleinrichtung und das Verstellen des mindestens einen Handgriffs charakterisiert ist. Weitere Merkmale, Vorteile und Einzelheiten der Erfindung ergeben sich aus der nachfolgenden Beschreibung eines Ausführungsbeispiels. Es zeigen:
- Fig. 1: perspektivische Ansicht eines Trennschleifgeräts in einer ersten Trennschleifposition beim Durchtrennen einer Schiene eines Gleises, wobei eine Führungseinrichtung des Trennschleifgeräts an der Schiene befestigt ist,
- Fig. 2: eine erste Seitenansicht des Trennschleifgeräts in Fig. 1,
- Fig. 3: eine zweite Seitenansicht des Trennschleifgeräts in Fig. 1 ohne die Schiene und die Führungseinrichtung,
- Fig. 4: eine Draufsicht auf das Trennschleifgerät in Fig. 1,
- Fig. 5: eine Seitenansicht des Trennschleifgeräts in einer zweiten Trennschleifposition beim Durchtrennen der Schiene, und
- Fig. 6: eine perspektivische Ansicht des Trennschleifgeräts in Fig. 5 ohne die Schiene und die Führungseinrichtung.

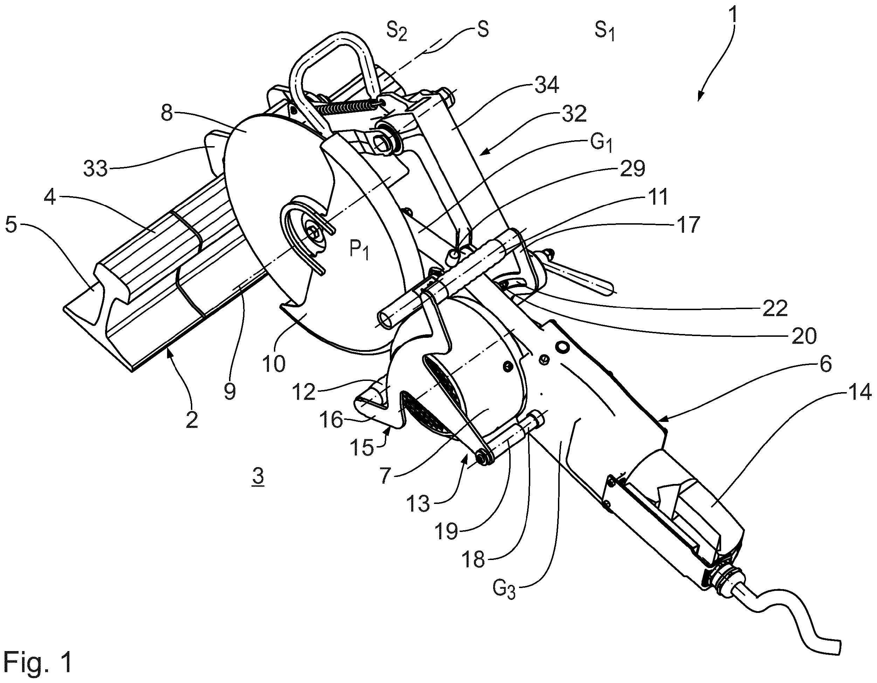

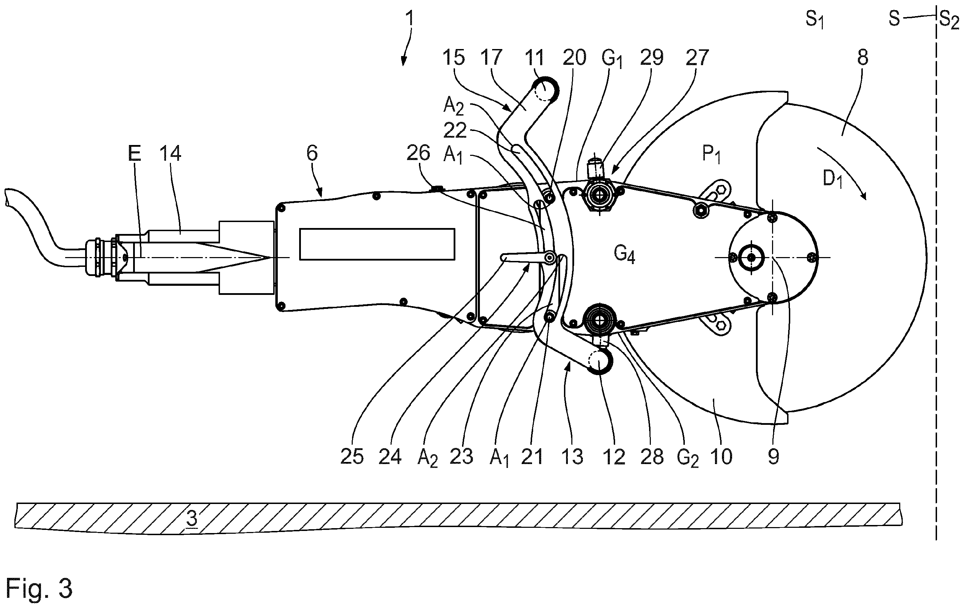

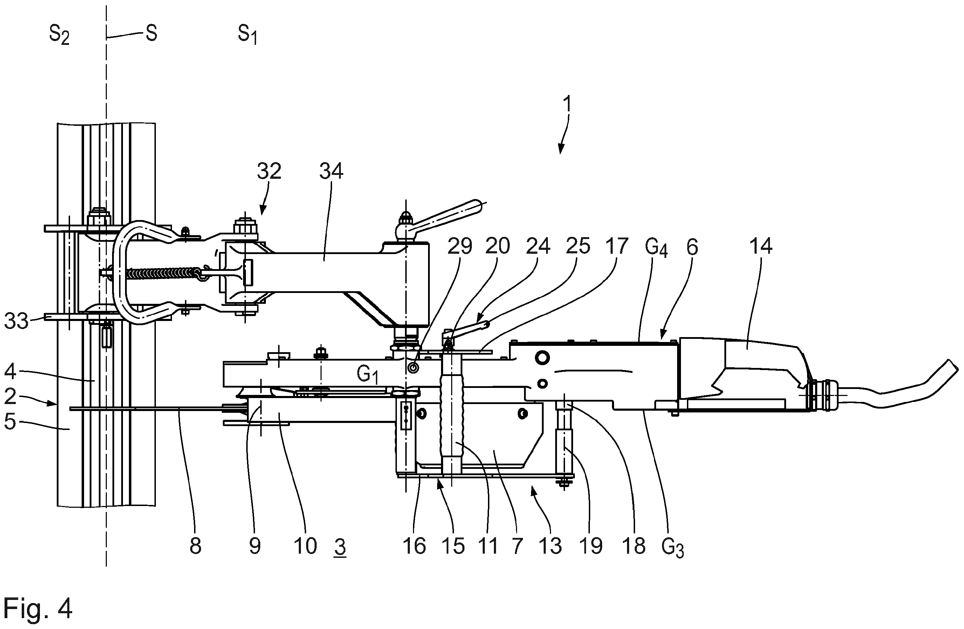

Das in den Figuren 1 bis 6 dargestellte Trennschleifgerät 1 dient zum Durchtrennen einer Schiene 2 eines Gleises. Die Schiene 2 ist an nicht näher dargestellten Schwellen befestigt, die in einem Schotterbett 3 angeordnet sind. Die Schiene 2 weist einen Schienenkopf 4 und einen Schienenfuß 5 auf. Die Schiene 2 ist im Querschnitt relativ zu einer Schienen-Symmetrieebene S im Wesentlichen symmetrisch ausgebildet. Die Schienen-Symmetrieebene S teilt einen Arbeitsraum zum Durchtrennen der Schiene 2 in eine erste Seite S₁ und eine zweite Seite S₂.

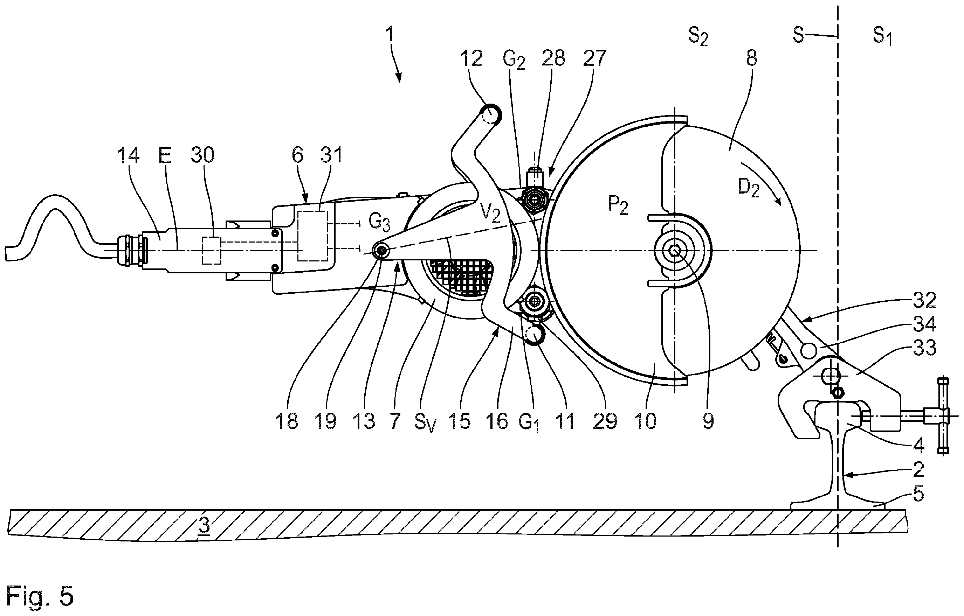

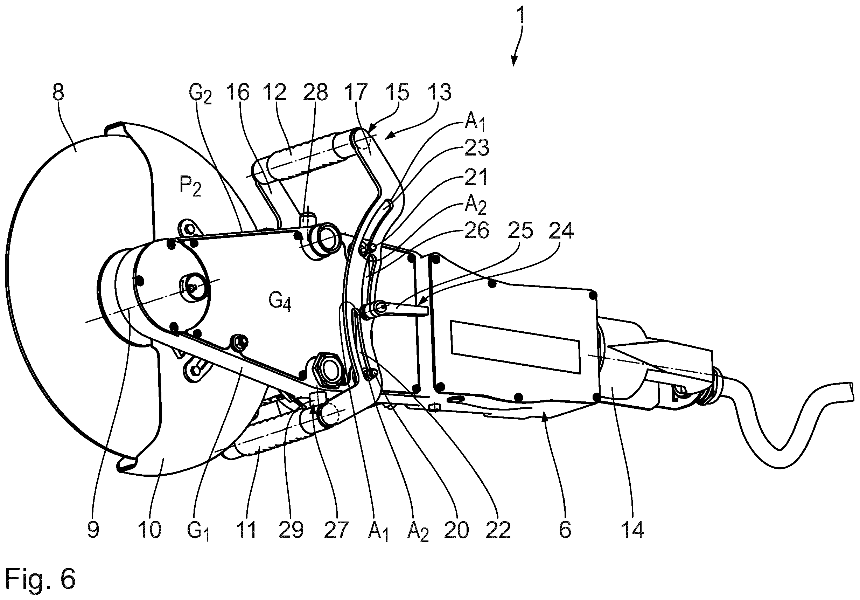

Die Figuren 1 bis 4 zeigen das Trennschleifgerät 1 in einer ersten Trennschleifposition P₁, in der das Trennschleifgerät 1 an der ersten Seite S₁ der Schienen-Symmetrieebene S angeordnet ist. Dem gegenüber zeigen die Figuren 5 und 6 das Trennschleifgerät 1 in einer zweiten Trennschleifposition P₂, in der das Trennschleifgerät 1 an der zweiten Seiten S₂ der Schienen-Symmetrieebene S angeordnet ist.

Das Trennschleifgerät 1 umfasst einen Grundkörper 6, an dem ein Antrieb 7 zum Drehantreiben einer Trennschleifscheibe 8 um eine Drehachse 9 angeordnet ist. Der Antrieb 7 ist als elektrischer Antriebsmotor ausgebildet. Die Trennschleifscheibe 8 ist in üblicher Weise an dem Trennschleifgerät 1 befestigt. Der Antrieb 7 treibt die Trennschleifscheibe 8 über eine nicht näher dargestellte Übertragungsmechanik an. Die Übertragungsmechanik umfasst beispielsweise eine Übertragungskette oder einen Übertragungsriemen. Zum Kontrollieren des Funkenflugs und zum Schutz eines Bedieners ist an dem Grundkörper 6 ein Funkenschutz 10 angeordnet.

Zum manuellen Führen weist das Trennschleifgerät 1 einen ersten Handgriff 11 und einen zweiten Handgriff 12 auf. Die Handgriffe 11, 12 sind an einer Verstelleinrichtung 13 befestigt, die zum Verstellen der Handgriffe 11, 12 in Abhängigkeit der Trennschleifpositionen P₁, P₂ verlagerbar an dem Grundkörper 6 angeordnet ist. Die Figuren 1 bis 4 zeigen die Verstelleinrichtung 13 und die Handgriffe 11, 12 in einer ersten Verstellposition V₁, wohingegen die Figuren 5 und 6 die Verstelleinrichtung 13 und die Handgriffe 11, 12 in einer zweiten Verstellposition V₂ zeigen. Zum manuellen Führen weist das Trennschleifgerät 1 einen dritten Handgriff 14 auf, der endseitig an dem Grundkörper 6 angeordnet ist. Der erste Handgriff 11 und der dritte Handgriff 14 dienen zum manuellen Führen des Trennschleifgeräts 1 in der ersten Trennschleifposition P₁. Entsprechend dienen der zweite Handgriff 12 und der dritte Handgriff 14 zum manuellen Führen des Trennschleifgeräts 1 in der zweiten Trennschleifposition P₂.

Der Grundkörper 6 definiert eine Grundkörper-Ebene E, die durch den Grundkörper 6 und die Drehachse 9 verläuft. Die Handgriffe 11, 12 sind an unterschiedlichen Seiten der Grundkörper-Ebene E angeordnet. Der erste Handgriff 11 ist einer Seite G₁ des Grundkörpers 6 zugewandt, wohingegen der zweite Handgriff 12 einer Seite G₂ zugewandt ist, die gegenüberliegend zu der Seite G₁ an dem Grundkörper 6 ausgebildet ist.

Die Verstelleinrichtung 13 umfasst ein Traggestell 15 mit einem ersten Traggestellteil 16 und einem zweiten Traggestellteil 17. Das erste Traggestellteil 16 ist mittels eines Schwenklagers 18 um eine Schwenkachse 19 verschwenkbar an dem Grundkörper 6 gelagert. Die Schwenkachse 19 verläuft im Wesentlichen parallel zu der Drehachse 9 und in der Grundkörper-Ebene E. Das Schwenklager 18 ist an einer Seite G₃ des Grundkörpers 6 befestigt. Die Seite G₃ ist zwischen den Seiten G₁ und G₂ angeordnet.

Das zweite Traggestellteil 17 ist mittels der Handgriffe 11, 12 mit dem ersten Traggestellteil 16 verbunden, sodass der Grundkörper 6 zwischen den Traggestellteilen 16, 17 angeordnet ist. Die Traggestellteile 16, 17 und die Handgriffe 11, 12 sind somit gemeinsam um die Schwenkachse 19 verschwenkbar. Das zweite Traggestellteil 17 ist mittels Führungsbolzen 20, 21 und zugehörigen Führungsnuten 22, 23 sowie einer Arretiereinheit 24 an einer Seite G₄ des Grundkörpers 6 verschwenkbar gelagert. Die Seite G₄ ist zwischen den Seiten G₁ und G₂ und gegenüberliegend zu der Seite G₃ angeordnet. Die Führungsbolzen 20, 21 sind an der Seite G₄ des Grundkörpers 6 beabstandet zueinander und benachbart zu der Seite G₁ bzw. G₂ angeordnet. Die Führungsnuten 22, 23 sind in dem zweiten Traggestellteil 17 ausgebildet. Der Führungsbolzen 20 ist in der Führungsnut 22 geführt, wohingegen der Führungsbolzen 21 in der Führungsnut 23 geführt ist. Die Verstelleinrichtung 13 bzw. das Traggestell 15 ist somit an den gegenüberliegenden Seiten G₃, G₄ an dem Grundkörper 6 gelagert.

Die Führungsbolzen 20, 21 bilden in der ersten Verstellposition V₁ erste Anschläge A₁ für das Traggestell 15 aus, wohingegen die Führungsbolzen 20, 21 in der zweiten Verstellposition V₂ zweite Anschläge A₂ ausbilden. Das Traggestell 15 ist somit zwischen den Anschlägen A₁ und A₂ um die Schwenkachse 19 verschwenkbar.

Die Arretiereinheit 24 umfasst ein Spannelement 25, das in einer Nut 26 geführt ist. Das Spannelement 25 ist an der Seite G₄ des Grundkörpers 6 angeordnet. Die Nut 26 ist in dem zweiten Traggestellteil 17 ausgebildet. Mittels des Spannelements 25 ist die Verstelleinrichtung 13 bzw. das Traggestell 15 in den Verstellpositionen V₁ und V₂ und einer beliebigen Zwischenposition arretierbar bzw. fixierbar.

Die Verstelleinrichtung 13 ist relativ zu einer Symmetrieebene Sv im Wesentlichen symmetrisch aufgebaut. Die Symmetrieebene Sv verläuft durch die Schwenkachse 19 und zwischen den Handgriffen 11, 12. Die Handgriffe 11, 12 sind parallel zu der Symmetrieebene Sv angeordnet.

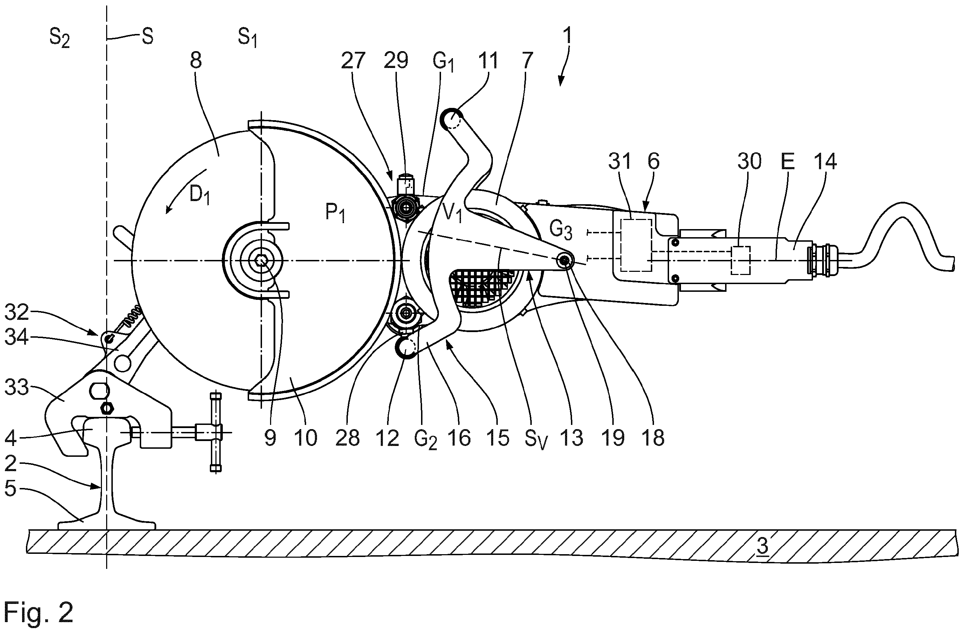

Zum automatischen Erkennen der Trennschleifpositionen P₁, P₂ weist das Trennschleifgerät 1 ein eine Erkennungseinrichtung 27 auf. Die Erkennungseinrichtung 27 umfasst einen ersten Kontaktschalter 28 und einen zweiten Kontaktschalter 29. Der erste Kontaktschalter 28 ist an der Seite G₂ des Grundkörpers 6 angeordnet und dem zweiten Handgriff 12 zugewandt. Demgegenüber ist der zweite Kontaktschalte 29 an der Seite G₁ des Grundkörpers 6 angeordnet und dem ersten Handgriff 11 zugewandt. Die Erkennungseinrichtung 27 dient zum Erkennen der ersten Trennschleifposition P₁, wenn der zweite Handgriff 12 in der ersten Verstellposition V₁ den ersten Kontaktschalter 28 betätigt, und zum Erkennen der zweiten Trennschleifposition P₂, wenn der erste Handgriff 11 in der zweiten Verstellposition V₂ den zweiten Kontaktschalter 29 betätigt. Dies ist beispielsweise in den Figuren 2 und 5 veranschaulicht.

Die Erkennungseinrichtung 27 umfasst ferner einen Sensor 30 zum Erkennen der Trennschleifpositionen P₁, P₂. Der Sensor 30 ist an dem Grundkörper 6 angeordnet. Der Sensor 30 ist in dem gezeigten Ausführungsbeispiel in den dritten Handgriff 14 integriert. Der Sensor 30 ist beispielsweise als Beschleunigungssensor, als optischer Sensor oder als Schwerkraftsensor ausgebildet.

Die Erkennungseinrichtung 27 umfasst eine Steuereinheit 31. Die Steuereinheit 31 ist in den Grundkörper 6 integriert. Die Steuereinheit 31 ist in Signalverbindung mit den Kontaktschaltern 28, 29 und mit dem Sensor 30. Die Steuereinheit 31 dient zum Erkennen der Trennschleifpositionen P₁, P₂ zum Ansteuern des Antriebs 7 sowie zur Einstellung einer Drehrichtung D₁ bzw. D₂ in Abhängigkeit der erkannten Trennschleifposition P₁ bzw. P₂.

Zum exakten Durchtrennen der Schiene 2 weist das Trennschleifgerät 1 eine Führungseinrichtung 32 auf. Die Führungseinrichtung 32 umfasst eine Klemmeinheit 33 und einen schwenkbar daran befestigten Gelenkarm 34. Der Gelenkarm 34 ist wiederum schwenkbar an dem Grundkörper 6 angeordnet.

Die Funktionsweise des Trennschleifgeräts 1 ist wie folgt:
Das Trennschleifgerät 1 wird mittels der Klemmeinheit 33 an der zu durchtrennenden Schiene 2 befestigt. Die Verstelleinrichtung 13 ist in der ersten Verstellposition V₁, sodass der zweite Handgriff 12 den ersten Kontaktschalter 28 betätigt. Die Steuereinheit 31 wertet ein erstes Signal des ersten Kontaktschalters 28 und ein zweites Signal des Sensors 30 aus. Mittels der Steuereinheit 31 erkennt die Erkennungseinrichtung 27 anhand der bereitgestellten Signale, dass sich das Trennschleifgerät 1 in der ersten Trennschleifposition P₁ befindet. Wird das Trennschleifgerät 1 von einem Bediener in der ersten Trennschleifposition P₁ eingeschaltet, so steuert die Steuereinheit 31 den Antrieb 7 derart an, dass die Trennschleifscheibe 8 in der Drehrichtung D₁ um die Drehachse 9 drehangetrieben wird. Dies ist in Figur 2 veranschaulicht.

Mittels der Handgriffe 11 und 14 führt ein Bediener das Trennschleifgerät 1 zu der Schiene 2 und durchtrennt den Schienenkopf 4 und teilweise den Schienenfuß 5. Die Führungseinrichtung 32 gewährleistet hierbei ein exaktes Durchtrennen der Schiene 2. Der Schienenfuß 5 ist aufgrund seiner Abmessung und aufgrund der Abmessung der Trennschleifscheibe 8 in der ersten Trennschleifposition P₁ nicht vollständig durchtrennbar.

Zum vollständigen Durchtrennen der Schiene 2 wird das Trennschleifgerät 1 manuell mittels der Führungseinrichtung 32 über den Schienenkopf 4 und durch die Schien-Symmetrieebene S in die zweite Trennschleifposition P₂ verschwenkt, in der das Trennschleifgerät 1 an der zweiten Seite S₂ der Schienen-Symmetrieebene S angeordnet ist.

Zum Verschwenken der Verstelleinrichtung 13 wird von dem Bediener zunächst die Arretiereinheit 24 gelöst. Anschließend wird die Verstelleinrichtung 13 von dem Bediener um die Schwenkachse 19 verschwenkt, sodass der erste Handgriff 11 in einer zweiten Verstellposition V₂ den zweiten Kontaktschalter 29 betätigt. In der zweiten Verstellposition V₂ wird die Arretiereinheit 24 wieder arretiert. Der zweite Kontaktschalter 29 stellt der Steuereinheit 31 ein erstes Signal und der Sensor 30 ein zweites Signal bereit. Anhand der Signale erkennt die Erkennungseinrichtung 27 mittels der Steuereinheit 31, dass sich das Trennschleifgerät 1 nun in der zweiten Trennschleifposition P₂ befindet. Wird das Trennschleifgerät 1 in der zweiten Trennschleifposition P₂ von einem Bediener eingeschaltet, so steuert die Steuereinheit 31 den Antrieb 7 derart an, dass die Trennschleifseite 8 in der Drehrichtung D₂ um die Drehachse 9 drehangetrieben wird. Die Drehrichtung D₂ ist umgekehrt zu der Drehrichtung D₁. Dies ist in Figur 5 veranschaulicht. In der zweiten Trennschleifposition P₂ wird das Trennschleifgerät 1 mittels der Handgriffe 12 und 14 manuell geführt. Die Schiene 2 wird von dem Bediener in der zweiten Trennschleifposition P₂ vollständig durchtrennt. Die Führungseinrichtung 32 gewährleistet hierbei ein exaktes Durchtrennen der Schiene 2.

Die Verstelleinrichtung 13 und/oder die Erkennungseinrichtung 27 gewährleisten ein einfaches, bedienerfreundliches und effizientes Durchtrennen der Schiene 2. Die Verstelleinrichtung 13 ermöglicht eine optimale Bodenfreiheit zwischen dem Trennschleifgerät 1 und dem Schotterbett 3. Alternativ oder zusätzlich zu den Kontaktschaltern 28, 29 und/oder dem Sensor 30 kann das Trennschleifgerät 1 weitere Kontaktschalter aufweisen, die von einem Bediener manuell betätigt werden müssen, um eine erkannte Trennschleifposition P₁, P₂ zu bestätigen. Wird eine von dem Sensor 30 erkannte Trennschleifposition P₁, P₂ durch die Kontaktschalter 28, 29 oder weitere Kontaktschalter nicht korrekt bestätigt, so verhindert die Steuereinheit 31 ein Ansteuern des Antriebs 7. Der Antrieb 7 wird somit nicht gestartet. Die Handgriffe 11, 12 verhalten sich gegenläufig, sodass die Handgriffe 11, 12 in jeder der Trennschleifpositionen P₁, P₂ eine ergonomische Arbeitshaltung des Bedieners und eine optimale Bodenfreiheit zu dem Schotterbett 3 gewährleisten. Die Arretiereinheit 24 kann einfach gelöst und wieder festgestellt werden, nachdem die Handgriffe 11, 12 verstellt wurden. Die Verstellung kann stufenlos oder stufenweise erfolgen. Die Arretiereinheit 24 kann formschlüssig und/oder kraftschlüssig ausgebildet sein.

## Patentansprüche

1. Trennschleifgerät zum Durchtrennen einer Schiene eines Gleises mit
- einem Grundkörper (6),
- einem Antrieb (7) zum Drehantreiben einer Trennschleifscheibe (8) um eine Drehachse (9),
- mindestens einem Handgriff (11, 12) zum manuellen Führen des Trennschleifgeräts (1),
**gekennzeichnet**
**durch** eine Erkennungseinrichtung (27), die mindestens einen Sensor (30) zum Erkennen einer ersten Trennschleifposition (P₁), in der das Trennschleifgerät (1) an einer ersten Seite (S₁) einer Schienen-Symmetrieebene (S) angeordnet ist, und zum Erkennen einer zweiten Trennschleifposition (P₂), in der das Trennschleifgerät (1) an einer zweiten Seite (S₂) der Schienen-Symmetrieebene (S) angeordnet ist, umfasst und
**durch** eine Steuereinheit (31) zum Einstellen einer Drehrichtung (D₁, D₂) des Antriebs (7) in Abhängigkeit der jeweils erkannten Trennschleifposition (P₁, P₂).

2. Trennschleifgerät nach Anspruch 1, **gekennzeichnet durch** eine Verstelleinrichtung (13) zum Verstellen des mindestens einen Handgriffs (11, 12) in Abhängigkeit der Trennschleifpositionen (P₁, P₂) des Trennschleifgeräts (1).

3. Trennschleifgerät nach Anspruch 2, **dadurch gekennzeichnet dass** die Verstelleinrichtung (13) verlagerbar an dem Grundkörper (6) angeordnet ist.

4. Trennschleifgerät nach Anspruch 2 oder 3, **dadurch gekennzeichnet, dass** die Verstelleinrichtung (13) ein Traggestell (15) aufweist, das relativ zu dem Grundkörper (6) um eine Schwenkachse (19) verschwenkbar ist.

5. Trennschleifgerät nach mindestens einem der Ansprüche 2 bis 4,
**dadurch gekennzeichnet,**
**dass** an der Verstelleinrichtung (13) ein ersten Handgriff (11) zum manuellen Führen des Trennschleifgeräts (1) in der ersten Trennschleifposition (P₁) und ein zweiter Handgriff (12) zum manuellen Führen des Trennschleifgeräts (1) in der zweiten Trennschleifposition (P₂) angeordnet sind.

6. Trennschleifgerät nach mindestens einem der Ansprüche 2 bis 5,
**dadurch gekennzeichnet,**
**dass** die Verstelleinrichtung (13) relativ zu einer Symmetrieebene (Sv) symmetrisch aufgebaut ist.

7. Trennschleifgerät nach mindestens einem der Ansprüche 2 bis 6,
**dadurch gekennzeichnet,**
**dass** ein ersten Handgriff (11) und ein zweiter Handgriff (12) an unterschiedlichen Seiten (G₁, G₂) des Grundkörpers (6) an der Verstelleinrichtung (13) angeordnet sind.

8. Trennschleifgerät nach mindestens einem der Ansprüche 2 bis 7, **gekennzeichnet**
**durch** eine Arretiereinheit (24) zum Arretieren der Verstelleinrichtung (13) in einer ersten Verstellposition (V₁) und in einer zweiten Verstellposition (V₂).

9. Trennschleifgerät nach mindestens einem der Ansprüche 2 bis 8,
**dadurch gekennzeichnet,**
**dass** die Verstelleinrichtung (13) in einer ersten Verstellposition (V₁) einen ersten Anschlag (A₁) und in einer zweiten Verstellposition (V₂) einen zweiten Anschlag (A₂) ausbildet.

10. Trennschleifgerät nach mindestens einem der Ansprüche 2 bis 9,
**dadurch gekennzeichnet,**
**dass** die Verstelleinrichtung (13) an gegenüberliegenden Seiten (G₃, G₄) des Grundkörpers (6) gelagert ist.

11. Trennschleifgerät nach mindestens einem der vorangegangenen Ansprüche, **dadurch gekennzeichnet,**
**dass** die Erkennungseinrichtung (27) mindestens einen ersten Kontaktschalter (28) zum Erkennen der ersten Trennschleifposition (P₁) und mindestens einen zweiten Kontaktschalter (29) zum Erkennen der zweiten Trennschleifposition (P₂) umfasst.

12. Verfahren zum Durchtrennen einer Schiene eines Gleises mit den Schritten:
- Bereitstellen eines Trennschleifgeräts (1) nach einem der Ansprüche 1 bis 11,
- teilweises Durchtrennen einer Schiene (2) mittels des Trennschleifgeräts (1), wobei das Trennschleifgerät (1) in der ersten Trennschleifposition (P₁) an der ersten Seite (S₁) der Schienen-Symmetrieebene (S) manuell geführt wird,
- Überführen des Trennschleifgeräts (1) von der ersten Trennschleifposition (P₁) in die zweite Trennschleifposition (P₂) an der zweiten Seite (S₂) der Schienen-Symmetrieebene (S),
- Erkennen der Trennschleifposition (P₂) mittels der Erkennungseinrichtung (27), und
- vollständiges Durchtrennen der Schiene (2) mittels des Trennschleifgeräts (1), wobei das Trennschleifgerät (1) in der zweiten Trennschleifposition (P₂) an der zweiten Seite (S₂) der Schienen-Symmetrieebene (S) manuell geführt wird und die Drehrichtungen (D₁, D₂) des Antriebs (7) in den Trennschleifpositionen (P₁, P₂) mittels der Steuereinheit (31) umgekehrt eingestellt werden.

13. Verfahren nach Anspruch 12, **gekennzeichnet durch** Verstellen des mindestens einen Handgriffs (11, 12) mittels der Verstelleinrichtung (13).

## Claims

1. Cutting grinder for cutting through a rail of a track, with
- a base body (6),
- a drive (7) for driving a cutting disc (8) in rotation about a rotational axis (9),
- at least one handle (11, 12) for manually guiding the cutting grinder (1),
**characterized**
**by** a detection device (27) comprising at least one sensor (30) for detecting a first cutting position (P1) in which the cutting grinder (1) is arranged on a first side (S1) of a rail symmetry plane (S), and for detecting a second cutting position (P2) in which the cutting grinder (1) is arranged on a second side (S2) of a rail symmetry plane (S), and
**by** a control unit (31) for setting a rotational direction (D1, D2) of the drive (7) depending on the respective detected cutting position (P1, P2).

2. Cutting grinder according to Claim 1, **characterized by** an adjustment device (13) for adjusting the at least one handle (11, 12) depending on the cutting positions (P1, P2) of the cutting grinder (1).

3. Cutting grinder according to Claim 2, **characterized in that** the adjustment device (13) is arranged so as to be displaceable on the base body (6).

4. Cutting grinder according to Claim 2 or 3, **characterized in that** the adjustment device (13) has a carrier frame (15) which is pivotable about a pivot axis (19) relative to the base body (6).

5. Cutting grinder according to at least one of Claims 2 to 4, **characterized in that** the adjustment device (13) has a first handle (11) for manually guiding the cutting grinder (1) in the first cutting position (P1) and a second handle (12) for manually guiding the cutting grinder (1) in the second cutting position (P2).

6. Cutting grinder according to at least one of Claims 2 to 5, **characterized in that** the adjustment device (13) is constructed symmetrically relative to a symmetry plane (Sv).

7. Cutting grinder according to at least one of Claims 2 to 6, **characterized in that** a first handle (11) and a second handle (12) are arranged on the adjustment device (13) on different sides (G1, G2) of the base body (6).

8. Cutting grinder according to at least one of Claims 2 to 7, **characterized by** a locking unit (24) for locking the adjustment device (13) in a first adjustment position (V1) and in a second adjustment position (V2).

9. Cutting grinder according to at least one of Claims 2 to 8, **characterized in that** the adjustment device (13) forms a first stop (A1) in a first adjustment position (V1) and a second stop (A2) in a second adjustment position (V2).

10. Cutting grinder according to at least one of Claims 2 to 9, **characterized in that** the adjustment device (13) is mounted on opposite sides (G3, G4) of the base body (6).

11. Cutting grinder according to at least one of the preceding claims, **characterized in that** the detection device (27) comprises at least one first contact switch (28) for detecting the first cutting position (P1) and at least one second contact switch (29) for detecting the second cutting position (P2).

12. Method for cutting through a rail of a track, with the steps:
- providing a cutting grinder (1) according to any of Claims 1 to 11,
- partially cutting through a rail (2) by means of the cutting grinder (1), wherein the cutting grinder (1) is manually guided in the first cutting position (P1) on the first side (S1) of the rail symmetry plane (S),
- transferring the cutting grinder (1) from the first cutting position (P1) to the second cutting position (P2) on the second side (S2) of the rail symmetry plane (S),
- detecting the cutting position (P2) by means of the detection device (27), and
- completely cutting through the rail (2) by means of the cutting grinder (1), wherein the cutting grinder (1) is manually guided in the second cutting position (P2) on the second side (S2) of the rail symmetry plane (S), and the rotational directions (D1, D2) of the drive (7) in the cutting positions (P1, P2) are reversed by means of the control unit (13).

13. Method according to Claim 12, **characterized by** adjustment of the at least one handle (11, 12) by means of the adjustment device (13).

## Revendications

1. Tronçonneuse à meule pour le sectionnement d'un rail d'une voie ferrée avec
- un corps de base (6),
- un entraînement (7) pour l'entraînement rotatif d'une meule de tronçonnage (8) autour d'un axe de rotation (9),
- au moins une poignée (11, 12) pour le guidage manuel de la tronçonneuse à meule (1),
**caractérisée**
**par** un dispositif de reconnaissance (27) qui comporte au moins un capteur (30) pour la reconnaissance d'une première position de tronçonnage (P₁), dans laquelle la tronçonneuse à meule (1) est agencée au niveau d'un premier côté (S₁) d'un plan de symétrie de rail (S), et pour la reconnaissance d'une seconde position de tronçonnage (P₂), dans laquelle la tronçonneuse à meule (1) est agencée au niveau d'un second côté (S₂) du plan de symétrie de rail (S), et
**par** une unité de commande (31) pour le réglage d'un sens de rotation (D₁, D₂) de l'entraînement (7) en fonction de la position de tronçonnage (P₁, P₂) reconnue respectivement.

2. Tronçonneuse à meule selon la revendication 1, **caractérisée**
**par** un dispositif de réglage (13) pour le réglage de l'au moins une poignée (11, 12) en fonction des positions de tronçonnage (P₁, P₂) de la tronçonneuse à meule (1).

3. Tronçonneuse à meule selon la revendication 2, **caractérisée en ce**
**que** le dispositif de réglage (13) est agencé de manière déplaçable au niveau du corps de base (6).

4. Tronçonneuse à meule selon la revendication 2 ou 3, **caractérisée en ce**
**que** le dispositif de réglage (13) présente un bâti porteur (15) qui peut être pivoté par rapport au corps de base (6) autour d'un axe de pivotement (19).

5. Tronçonneuse à meule selon au moins l'une des revendications 2 à 4, **caractérisée en ce**
**qu**'une première poignée (11) pour le guidage manuel de la tronçonneuse à meule (1) dans la première position de tronçonnage (P₁) et une seconde poignée (12) pour le guidage manuel de la tronçonneuse à meule (1) dans la seconde position de tronçonnage (P₂) sont agencées au niveau du dispositif de réglage (13).

6. Tronçonneuse à meule selon au moins l'une des revendications 2 à 5, **caractérisée en ce**
**que** le dispositif de réglage (13) est constitué de manière symétrique par rapport à un plan de symétrie (Sv).

7. Tronçonneuse à meule selon au moins l'une des revendications 2 à 6, **caractérisée en ce**
**qu**'une première poignée (11) et une seconde poignée (12) sont agencées au niveau de différents côtés (G₁, G₂) du corps de base (6) au niveau du dispositif de réglage (13).

8. Tronçonneuse à meule selon au moins l'une des revendications 2 à 7, **caractérisée**
**par** une unité d'arrêt (24) pour l'arrêt du dispositif de réglage (13) dans une première position de réglage (V₁) et dans une seconde position de réglage (V₂).

9. Tronçonneuse à meule selon au moins l'une des revendications 2 à 8, **caractérisée en ce**
**que** le dispositif de réglage (13) réalise dans une première position de réglage (V₁) une première butée (A₁) et dans une seconde position de réglage (V₂) une seconde butée (A₂).

10. Tronçonneuse à meule selon au moins l'une des revendications 2 à 9, **caractérisée en ce**
**que** le dispositif de réglage (13) est logé au niveau de côtés opposés (G₃, G₄) du corps de base (6).

11. Tronçonneuse à meule selon au moins l'une des revendications précédentes, **caractérisée en ce**
**que** le dispositif de reconnaissance (27) comporte au moins un premier commutateur de contact (28) pour la reconnaissance de la première position de tronçonnage (P₁) et au moins un second commutateur de contact (29) pour la reconnaissance de la seconde position de tronçonnage (P₂).

12. Procédé de sectionnement d'un rail d'une voie ferrée avec les étapes :
- de fourniture d'une tronçonneuse à meule (1) selon l'une des revendications 1 à 11,
- de sectionnement partiel d'un rail (2) au moyen de la tronçonneuse à meule (1), dans lequel la tronçonneuse à meule (1) est guidée manuellement dans la première position de tronçonnage (P₁) au niveau du premier côté (S₁) du plan de symétrie de rail (S),
- de transfert de la tronçonneuse à meule (1) de la première position de tronçonnage (P₁) dans la seconde position de tronçonnage (P₂) au niveau du second côté (S₂) du plan de symétrie de rail (S),
- de reconnaissance de la position de tronçonnage (P₂) au moyen du dispositif de reconnaissance (27), et
- de sectionnement complet du rail (2) au moyen de la tronçonneuse à meule (1), dans lequel la tronçonneuse à meule (1) est guidée manuellement dans la seconde position de tronçonnage (P₂) au niveau du second côté (S₂) du plan de symétrie de rail (S) et les sens de rotation (D₁, D₂) de l'entraînement (7) sont réglés inversement dans les positions de tronçonnage (P₁, P₂) au moyen de l'unité de commande (31).

13. Procédé selon la revendication 12, **caractérisé**
**par** le réglage de l'au moins une poignée (11, 12) au moyen du dispositif de réglage (13).
